# EUROPEAN PATENT APPLICATION

(11) **EP 4 578 667 A1**
(43) Date of publication of application: **02.07.2025**
(21) Application number: 24198936.7
(22) Date of filing: 06.09.2024
(51) Int. Cl.: B60C 5/16, B60B 21/12, B60C 19/00

(54) **WHEEL, ELEMENT FOR A WHEEL, THERMAL INSULATION ELEMENT, VEHICLE AND METHOD FOR ASSEMBLING OR THERMICALLY INSULATING A WHEEL**

(71) Applicant: Volvo Car Corporation, 405 31 Göteborg (SE)
(72) Inventor: HOBEIKA, Teddy, 40531 Göteborg (SE); SAMUELSSON, Mattias, 40531 Göteborg (SE)
(74) Representative: Maiwald GmbH

(57) **Abstract**

The disclosure relates to a wheel (10) for a vehicle (1). The wheel (10) comprising a rim (12) and a tyre (14), wherein the tyre (14) is mounted on the rim (12), wherein a first thermal insulation (16) element is provided between the rim (12) and the tyre (14).

Further, the disclosure relates to an element for a wheel (10), a thermal insulation element (16), a vehicle (1) and a method.

## Description

### TECHNICAL FIELD

The present disclosure relates to a wheel, to an element for a wheel, to a thermal insulation element and to a vehicle. Further, the disclosure relates to a method for assembling or thermically insulating a wheel.

### BACKGROUND ART

Road vehicles like passenger cars comprise wheels, wherein each wheel comprises a rim and a tyre, wherein the tyre is mounted on the rim. The tyre is the contacting element of the vehicle with regard to the road, wherein forces of the vehicle like driving or braking forces are transferred to the road surface from the vehicle. However, when the vehicle is moving, the rolling tyre is dynamically deformed due to the rotation of the tyre on the road surface. This mechanical mechanism causes the rolling resistance of the vehicle. Therefore, for moving forward or backwards, the vehicle must apply drive power to overcome this resistance. It is known that a heated-up tyre comprises a significantly lower rolling resistance compared to a cold tyre as the material of the tyre is softer and less energy is needed for dynamically deforming the tyre. The heating-up of the tyre is in particular caused by the rolling and therefore by the dynamically deforming of the tyre. However, the tyre constantly loses heat to the ambient leading to a reduced heating process of the tyre or even to a cool-down process when the tyres do not move. A further known effect of wheels comprising a tyre and a rim with a cavity for a gas is that the pressure of the gas is increased by the heat transferred to the gas. This also leads to a reduction of the rolling resistance of the tyre.

### SUMMARY

The objective to be solved by the present disclosure, thus, relates to a reduction of thermal losses of a tyre and therefore, to an improvement of the rolling resistance and/or energy efficiency of the tyre.

The problem is at least partially solved or alleviated by the subject matter of the independent claims of the present disclosure, wherein further examples are incorporated in the dependent claims.

According to a first aspect, a wheel for a vehicle is provided. The wheel comprising a rim and a tyre, wherein the tyre is mounted on the rim. Further, a first thermal insulation element is provided between the rim and the tyre. In other words: The first thermal insulation element separates the tyre from the rim completely or at least partially. By providing the first thermal insulation element between the rim and the tyre, the heat transfer characteristic from the tyre to the rim based on thermal conduction from the tyre material to the material of the rim is reduced, whereby heat once absorbed by the tyre is kept in the tyre for a longer period of time.

In other words: providing the first thermal insulation element between the rim and the tyre increases a heat resistance in a heat path leading from the tyre to the rim. Thereby, heat transfer from the tyre to the rim is completely blocked or at least reduced. I.e., heat transfer from the tyre via the rim to the ambient is reduced. By providing the first thermal insulation element between the rim and the tyre, heat is stored in the material of the tyre causing a softer material characteristic and thereby a lower rolling resistance of the tyre.

This leads to a more efficient tyre, with an increased heat storing characteristic, when the tyre heats up when the vehicle is moving and the tyre is rolling and thereby dynamically deformed.

According to an example, the first thermal insulation element is a portion of the tyre or the first thermal insulation element is a portion of the rim. Thereby, the first thermal insulation element is connected to the tyre or to the rim, forming a portion thereof, respectively. Such configuration with the first thermal insulation element as a portion or part of the tyre or of the rim, respectively, leads to a less complex wheel, as such wheel does not comprise a further and separate element.

If the first thermal insulation element is a portion of the rim, the first thermal insulation element may be formed as a tyre seat configured to receive a tyre mounted to the rim. Therefore, it is possible to mount commercially available tyres on such rim, if the corresponding tyre seat is configured accordingly. The first thermal insulation element may in this case be configured as one piece with the rim. Thereby, a resilient connection between the rim and the first thermal insulation element is realised. The first thermal insulation element as a tyre seat may be configured in such manner that the surface of the first thermal insulation element, i.e. of the tyre seat, is the only portion of the rim contacting the tyre. Thereby, a complete separation of the tyre and the rim is realised. Such rim can be produced by casting the rim with a portion forming the first thermal insulation element. Such portion may be an outer portion of the rim, in particular forming the tyre seat.

If the first thermal insulation element is a portion of the tyre, the first thermal insulation element may be formed as a contact portion of the tyre configured to get in contact with a corresponding tyre seat of a rim when mounted on the rim. Therefore, it is possible to mount a tyre comprising a first thermal insulation element as a portion of the tyre on a commercially available rim, if the corresponding contact portion is configured accordingly. As a contact portion of the tyre, the first thermal insulation element may be partially encapsulated by the tyre material. E.g., the encapsulation may be configured in such manner, that a face of the first thermal insulation element lays open and is configured to contact the rim when the tyre is mounted thereon. Thereby, a resilient connection between the tyre and the first thermal insulation element is realised. The encapsulation may be configured in such manner that the face of the first thermal insulation element is the only part contacting the rim. Thereby, a complete separation of the tyre and the rim is realised.

According to an example, the first thermal insulation element is separate from the rim and separate from the tyre. Such configuration allows a separate exchange of the first thermal insulation element, of the tyre and/or of the rim. The first thermal insulation element may be configured to be provided between a combination of a commercially available rim and a commercially available tyre. Therefore, a separate first thermal insulation element may be used for upgrading a commercially available wheel for thermically insulating the tyre against the rim. The first thermal insulation element may be configured to be arranged on a tyre seat of the rim or may form a tyre seat on the rim. Thereby, assembling the wheel, in particular the tyre on the rim can be carried out.

The first thermal insulation element may be connected to the rim or to the tyre by form fit, in particular by the use of fastening means like bolts. This connection can be disconnected again for exchanging the first thermal insulation element.

Alternatively or additionally, the first thermal insulation element may be connected to the rim or to the tyre by a friction-locked connection, wherein the first thermal insulation element is connected friction-based to the rim or to the tyre, without the use of any more fastening means.

Alternatively or additionally, the first thermal insulation element may be connected to the rim or to the tyre in an adhesive manner like glueing. This connection can be a configured as a durable and strong connection and may in particular be combined with the friction-locked connection.

According to an example, the tyre is an airless or gasless tyre. Such tyre may be a tyre without any cavity within the tyre comprising a gas for carrying a load from a vehicle mass acting on the tyre. Instead, an airless or gasless tyre is configured to carry the load acting on the tyre purely by the material of the tyre. In other words, the complete load acting on the wheel is carried by the tyre. Such tyre may be configured as a solid tyre, wherein the tyre material as a hole is configured to carry the load, or as a tyre with a structure like a framework configured to carry the load. Therefore, providing the first insulation portion between the airless or gasless tyre and the rim reduces heat losses from the tyre material to the rim and therefore helps to reduce the rolling resistance of the tyre as it helps to keep the tyre material softer.

According to an example, a closed cavity for a gas is at least limited by the rim and the tyre. In other words, the tyre and the rim may form a cavity wherein a gas can be filled in. The gas may be air or a tyre gas like nitrogen. The air or gas in the cavity is configured to carry the load on the wheel respectively on the tyre, whereby the pressure in the cavity acts against the tyre load. Furthermore, the air or gas in the cavity is used to stiffen the tyre from the inside of the cavity. The effect of stiffening the tyre from the inside is improved when the pressure inside the cavity is increased due to the heating-up of the tyre when the tyre is dynamically deformed while rolling.

Heat introduced into the gas of the cavity leads to an increasing pressure of the gas in the cavity causing a reduction of the rolling resistance. Therefore, the first thermal insulation element between the rim and the tyre improves the rolling resistance by reducing or blocking heat flowing from the cavity through the tyre to the rim.

According to an example, the wheel comprises a second thermal insulation element provided at an interface between the rim and the cavity. In other words, the second thermal insulation element separates the air or gas at least partially from the rim, respectively avoids a direct contact to the rim. This second thermal insulation element may block or at least reduce a convective heat flow from the air or gas in the cavity to the rim. Thereby, the heat stored in the air or gas within the cavity may then be transferred to the tyre via an inner surface of the tyre limiting the cavity. As the first thermal insulation element blocks or reduces the heat flow from the tyre to the rim, the tyre may act as a thermal reservoir that stores heat and keeps the gas in the cavity heated up, when the temperature of the tyre has reached a certain level. In this state, the heat flow from the cavity to the rim is reduced and the gas in the cavity can heat up and the requested tyre pressure for reducing the rolling resistance is reached earlier.

The second thermal insulation element may be connected to the rim by form fit, in particular by the use of fastening means like bolts. This connection can be disconnected again for exchanging the second thermal insulation element.

Alternatively or additionally, the second thermal insulation element may be connected to the rim by a friction-locked connection, wherein the second thermal insulation element is connected friction-based to the rim, without the use of any more fastening means.

Alternatively or additionally, the second thermal insulation element may be connected to the rim in an adhesive manner like glueing. This connection can be a configured as a durable and strong connection and may in particular be combined with the friction-locked connection.

The second thermal insulation element can be configured as a portion of the rim and formed as one element of the rim. Thereby, the rim can be pre-fabricated and in particular be combined with a commercially available tyre.

Alternatively, the second thermal insulation element can be arranged on an inner surface of the rim facing the cavity, to directly block or reduce heat losses before entering the rim.

The second thermal insulation element may be arranged on a face of the rim limiting the closed cavity, i.e., facing the gas. Thereby, the second thermal insulation element is facing the gas and directly insulating the gas against the rim.

According to an example, the first thermal insulation element and the second thermal insulation element are connected. In other words, the first thermal insulation element and the second thermal insulation element are formed by respective portions of an integral thermal insulation element. I.e., the integral thermal insulation element may be formed as a one-piece element. According to this configuration of the first and second thermal insulation element, there is no contact portion between the first and second thermal insulation element which might form a heat thermal transfer portion, whereby heat from the tyre and/or from the air or gas in the cavity is transferred to the rim. Alternatively, the first thermal insulation element and the second thermal insulation element are abutting to one another as separate insulation elements, thereby forming a continuous insulation layer. For increasing the thermal insulation of the wheel, a sealing and/or insulation means may be provided between the first and second thermal insulation element to seal and/or insulate the closed cavity. Thereby, a closed insulation layer may be formed.

According to an example, the first thermal insulation element and the second thermal insulation element comprise the same thermal insulation material or consist of the same thermal insulation material. This may allow to form the above-mentioned integral insulation element. However, if the first thermal insulation element and the second thermal insulation element are formed separately, connecting them by a material joint or by an adhesive joint like welding or glueing is facilitated, if both thermal insulation elements comprise the same thermal insulation material or consist of the same thermal insulation material. The use of the same thermal insulation material for the first thermal insulation element and for the second thermal insulation element, both thermal insulation elements may have the same thermal expansion properties, in particular the same thermal expansion coefficient. This allows a facilitated design of the first thermal insulation element and of the second thermal insulation element. In particular, the first thermal insulation element and the second thermal insulation element may thereby be design for avoiding mechanical stress due to heat-induced expansion.

According to an example, the first thermal insulation element and the second thermal insulation element comprise different thermal insulation materials or consist of different thermal insulation materials. By using different thermal insulation materials, requested thermal properties combined with mechanical properties can be realised. As the first thermal insulation element is provided between the tyre and the rim, it is exposed to greater mechanical loads compared to the second thermal insulation element only facing the cavity. Therefore, the material used for the first thermal insulation element may be configured stiffer, harder, and/or more resilient against mechanical compression compared to the second thermal insulation element. Additionally or alternatively, as the second thermal insulation element faces the cavity instead of being provided between the rim and the tyre, the second thermal insulation element may have a bigger extend along a rotational axis of the wheel compared to the first thermal insulation element that extends only between the tyre and the rim along the rotational axis of the wheel. Therefore, the material of the second thermal insulation element may be a lighter material compared to the material of the first thermal insulation element. Thereby, the mass of the wheel can be kept within requested limits.

Additionally or alternatively, the thermal properties of the first thermal insulation element, respectively of the material of the first thermal insulation element, and the thermal properties of the second thermal insulation element, respectively of the material of the second thermal insulation element, can be configured in such manner that a heat flow from the cavity to the tyre or vice versa is realized. Thereby, a heat flow from the cavity directly to the rim or from the tyre directly to the rim is blocked or at least reduced.

According to an example, the wheel further comprises a third thermal insulation element provided at an interface of an inner surface of the cavity. The third thermal insulation element may be formed as a thermal insulation layer between the cavity and the material of the tyre. In other words, the third thermal insulation layer separates the tyre from the cavity, thereby separating the air or gas in the cavity from the tyre at least partially or completely. Thereby, the third thermal insulation element blocks or at least reduces heat transfer from the cavity to the tyre material. This allows a better storage of the heat once introduced into the air or gas in the cavity of the tyre and avoids or reduces a loss of heat through the tyre. This leads to a higher air or gas pressure in the cavity and thereby to a reduced rolling resistance. The interface, the third insulation element is provided on, may extend over the complete inner surface of the tyre, wherein the third insulation element extends over the complete interface. In other words, the inner surface of the tyre is completely separated from the air or gas inside the cavity. Alternatively, the interface is only extending over a portion of the inner surface or the tyre. E.g., the interface extends over the surface of the side wall facing the cavity and/or over the inner surface of the tyre treat facing the cavity. In other words, the third thermal insulation element is provided only over a portion of the inner surface of the cavity. The interface may be provided in such way that a heat transfer from the gas or air in the cavity to a desired portion of the tyre or vice versa is possible. E.g., the interface may only be provided on the inner side wall of the tyre. Thereby, more heat can be transferred to the tyre tread from the cavity or vice versa compared to the side walls of the tyre, causing a softer material characteristic of the tyre treat and a stiffer material characteristic of the side walls respectively an increasing of the pressure in the cavity. Thereby improving the rolling resistance of the wheel.

The third thermal insulation element may be connected to the interface by a friction-locked connection, wherein the third thermal insulation element is connected friction-based to the rim, without the use of any more fastening means.

Alternatively or additionally, the third thermal insulation element may be connected to the rim in an adhesive manner like glueing. This connection can be a configured as a durable and strong connection and may in particular be combined with the friction-locked connection.

According to an example, the first thermal insulation element and/or the second thermal insulation element and/or the third thermal insulation element is formed by a thermal insulation layer. Such thermal insulation element may be configured as a one-layer insulation element having a single layer, wherein a thin insulation layer may be realized. Alternatively, such thermal insulation element may be configured as a multi-layer insulation element. Thereby, different thermal insulation properties can be combined to provide one thermal insulation element. The respective thermal insulation element can therefore be configured as a sandwich element comprising two or more layers of thermal insulation material.

Additionally or alternatively, the first thermal insulation element and/or the second thermal insulation element and/or the third thermal insulation element is formed by a thermal insulation coating. The coating can be applied or painted on the respective surface or interface as a liquid coating or as a powder coating. Using a coating allows a realization of a thermal insulation element that is adapted to complex in particular curved surfaces. Thereby, an evenly formed thermal insulation element can be formed. Regarding the first thermal insulation element, provided between the tyre and the rim, an evenly formed first thermal insulation element allows a reliable fitting of the tyre on the rim. The coating can be a single-layer or multi-layer coating.

Regarding the realization of the first thermal insulation element and/or the second thermal insulation element and/or the third thermal insulation element as a thermal insulation layer and/or as a thermal insulation coating, mechanical properties of the respective thermal insulation element can be realized. E.g., the first thermal insulation element can be configured as a stiffer insulation element as it is provided between the rim and the tyre to ensure a stable coupling of the tyre on the rim, wherein the third insulation element may be configured more elastically, if it is provided on an interface on an inner surface of the tyre, like the inner surface of the tyre tread to avoid increasing the rolling resistance. Additionally, the second thermal insulation element may be configured with lower mass as the first and third thermal insulation element, to keep the mass of the wheel within limits.

According to an example, the first thermal insulation element and/or the second thermal insulation element and/or the third thermal insulation element comprises a ceramic material, an elastomer material, a foam material, a porous material, a natural material and/or a vacuumed cavity and/or a sandwich element. These elements may be combined with each other, forming insulation elements with several materials to for realizing required thermal and mechanical properties.

As natural materials, cork, wood, or natural fabric may be used as such materials may can realize the required thermal insulation properties.

Ceramic materials can be applied by a coating process like powder coating, to apply the respective thermal insulation element on complex surfaces.

Elastomer materials like rubber, are cost-efficient and/or may have elastic mechanical properties. Therefore, such materials can form a respective thermal insulation element on a surface dynamically deforming when the wheel is rolling on the surface of the road. Elastomer materials can be applied by coating, e.g. liquid or powder coating. Therefore, applying elastomer material on complex surfaces is possible. Alternatively, the elastomer may be applied to the respective surface as a coating film.

Foam and porous materials comprise good insulation properties and can be configured as pre-fabricated inlays between the rim and the tyre. Furthermore, such materials have a low mass, whereby the mass of the wheel can be kept within limits. However, foam and porous materials can also consist of the tyre material or of the material of the rim, and can be produced during the production of the tyre or of the rim. This may be realised by producing the respective portion as a porous portion, e.g. by adding a means in the material of the tyre or of the rim causing the porous structure.

A vacuumed cavity can be realized as a cavity in the rim, which is created when casting the rim. Alternatively or additionally, the vacuumed cavity can be realized by an inlay as a portion of the respective thermal insulation element or as the respective thermal insulation element. Such vacuumed cavity has, due to the lack of material, good thermal insulation properties and a low mass, whereby the mass of the wheel can be kept within limits.

The sandwich element can be formed as a combination of several materials mentioned above. Thereby, requested thermal and/or mechanical properties of the respective thermal insulation can be realized.

The first thermal insulation element may additionally comprise a hard surface or a layer or material forming a hard surface, e.g. metal, the tyre can be mounted on respectively for contacting the rim.

According to an example, the wheel further comprises a heat storing element. The heat storing element may be provided between an outer surface of the rim and an outer surface of the tyre. In other words, the heat storing element stores heat generated during the dynamically deformation of the tyre during rolling within the wheel and is configured to transfer the stored heat to the wheel, in particular to the tyre and/or to the cavity, according to their thermal state. If the tyre or the rim loses heat to the ambient, the heat storing element may equalize or reduce this loss of heat. In particular, the heat storing element may be provided in the tyre, e.g. encapsulated by the tyre material. Thereby, stored heat may be directly transferred to the tyre and further to the cavity. Alternatively, the heat storing element may be provided on an interface of a portion of an inner surface of the tyre. Thereby, the heat can be transferred to the air or gas in the cavity causing an increasing of the pressure in the cavity. The heat storing element may be a metal element. The heat storing element may be configured as an element comprising a dense material. The heat storing element may be configured as an element with a higher heat storing capacity as the elements of the wheel surrounding the heat storing element, like the tyre, the rim, or the gas in the cavity. By providing the heat storing element, the tyre and/or the cavity can be kept heated-up for a longer period of time.

According to a further aspect, a rim for a wheel as described above is provided. The first thermal insulation element as described above may be a portion of the rim or the rim may be configured to receive or contact the first thermal insulation element.

According to a further aspect, a tyre for a wheel as described above is provided. The first thermal insulation element as described above may be a portion of the tyre or the tyre may be configured to receive or contact the first thermal insulation element.

According to a further aspect, a thermal insulation element arrangeable between a tyre for a wheel as described above and a rim for a wheel as described above is provided. The thermal insulation element may be configured as the first thermal insulation as described above or may comprise the first thermal insulation element as described above. The thermal insulation element as a separate insulation element may be configured to be provided between a commercially available tyre and a commercially available rim, wherein a thermal insulation between the tyre and the rim is realised.

According to a further aspect, a vehicle comprising at least one wheel as described above is provided.

According to an example, the vehicle is configured as a vehicle comprising four wheels as described above. The vehicle may be configured as a passenger car.

According to a further aspect, a method for assembling or thermically insulating a wheel as described above is provided. The method may comprise at least the step of providing a first insulation element between the rim and the tyre.

According to an example, the method may be a method for manufacturing a rim or a tyre for a wheel. The method comprising the following step:
- providing a rim and a first thermal insulation element and connecting the first thermal insulation element to the rim, wherein the first thermal insulation element forms a tyre seat. Thereby, a rim is provided with a thermically insulated tyre seat, wherein a commercially available tyre may be mounted on such rim. In particular, the connecting the first thermal insulation element to the rim may be carried out during casting the rim, wherein both, the rim and the of the first thermal insulation element are produced simultaneously.
Alternatively, the method may comprise the following step:
- providing a tyre and a first thermal insulation element and connecting the tyre with the first thermal insulation element, wherein the first thermal insulation element forms a contact portion for contacting a tyre seat of a rim. In particular, the connecting of the tyre with the first thermal insulation element may be carried out during production of the tyre, whereby the first thermal insulation element is at least partially encapsulated by the material of the tyre and forming a contact portion for contacting a rim. Thereby, a tyre is provided with a thermically insulated contact portion to be mounted on a tyre seat of a rim. The rim may be a commercially available rim.

Alternatively, the method may be a method for thermically insulating a wheel for a vehicle. The wheel comprising a rim and a tyre.
The method comprising the step:
- separating the rim and the tyre,
Further the method comprising the step:
- providing a first thermal insulation element, assembling the rim, the tyre and the first thermal insulation element, whereby arranging the first thermal insulation element between the rim and the tyre. Thereby, a commercially available wheel may be provided with a thermal insulation. This may be carried out when the rim or tyre of a customer is exchanged. In this case, the rim or tyre which is assembled with the other elements of the wheel is replaced by a new rim or tyre, respectively. Thereby, the rolling resistance of a wheel can subsequently be improved by providing the first thermal insulation.
Alternatively the method comprising the step:
- replacing the rim with a rim comprising a first thermal insulation element, assembling the rim comprising the first thermal insulation element and the tyre, whereby arranging the tyre on the first thermal insulation element, or
- replacing the tyre with a tyre comprising a first thermal insulation element, assembling the rim and the tyre comprising the first thermal insulation element, whereby arranging the tyre comprising the first thermal insulation element on the rim, wherein the first thermal insulation element contacting the rim.
By these steps, the wheel is upgraded wherein a tyre or rim already comprising the first thermal insulation element is provided.

It should be noted that the above examples may be combined with each other irrespective of the aspect involved. Accordingly, the method may be combined with structural features and, likewise, the tyre, the rim, the wheel and/or the thermal insulation elements may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a wheel according to the present disclosure,
- Figure 2: shows a first example of a wheel according to the present disclosure,
- Figure 3: shows a second example of a wheel according to the present disclosure,
- Figure 4: shows a third example of a wheel according to the present disclosure,
- Figure 5: shows a fourth example of a wheel according to the present disclosure,
- Figure 6: shows a further example for a wheel with a gas cavity according to the present disclosure.

### DETAILED DESCRIPTION

The Figures are merely schematic representations and serve only to illustrate examples of the disclosure. Identical or equivalent elements are in principle provided with the same reference signs.

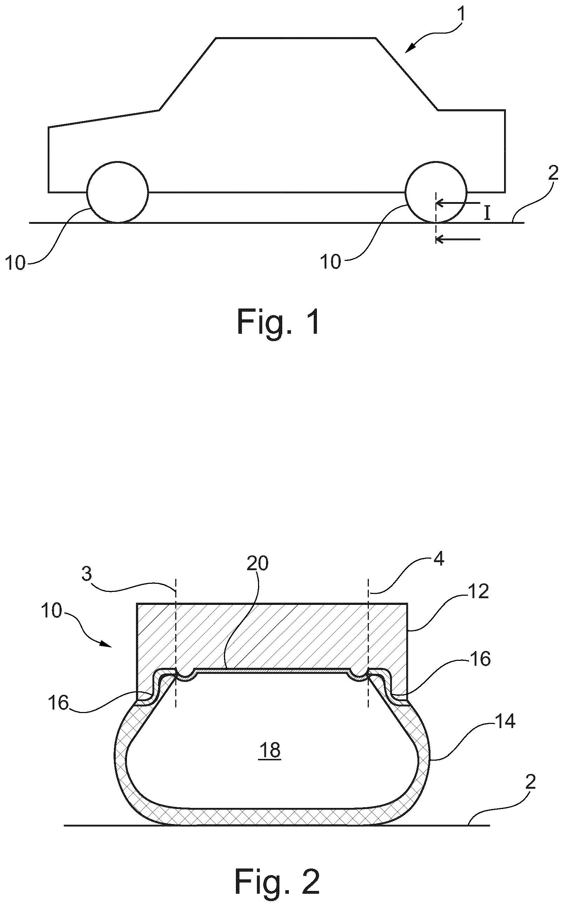

Figure 1 shows a vehicle 1 in a side view comprising wheels 10 being in contact to a surface of a road 2, wherein the vehicle 1 can move on the road 2. During movement of the vehicle 1, the wheels 10 roll on the surface of the road 2, wherein a rolling resistance is generated by the wheels 10, more precisely, by the tyres of the wheels 10. In this particular example, the vehicle 10 comprises four wheels 10. At least one of these wheels 10 may comprise a thermal insulation.

Several examples of the thermal insulation are explained more in detail with reference to the Figures 2 to 6. For a better orientation, these examples are shown in sectional views of the respective right wheel 10 in Fig. 1 from direction I.

The first example is shown in Figure 2. The lower half of the wheel 10 is shown in a sectional view.

The wheel 10 comprises a rim 12 and a tyre 14 mounted on the rim 12. The tyre 14 is in contact with the surface of the road 2.

The tyre 14 and the rim 12 form a closed cavity 18 comprising an air or gas for carrying the load of the vehicle 1 and for stiffening the tyre 14 from the inside.

The tyre 14 comprises a first thermal insulation element 16 configured as a portion of the tyre 14, in particular as a contact portion of the tyre 14, wherein the tyre 14 is in contact with the rim 12, more precisely with a tyre seat of the rim 12 via the contact portion.

The first thermal insulation element 16 is configured as a closed ring-shaped element embedded in the material of the tyre 14 and extending around the tyre seat of the rim 12. As the first thermal insulation element 16 forms a contact portion of the tyre 14 for contacting the respective tyre seat, the first thermal insulation element 16 is configured to be mechanically resilient to hold the tyre 14 on the rim 12, respectively in the tyre seat of the rim 12.

The tyre seats of the rim 12 are in the drawing the outer portions of the rim 12, on the left side of the left dotted perpendicular line 3 and on the right side of the right dotted perpendicular line 4. Therefore, both lines also mark the end of the first thermal insulation element 16 which is only provided in the area of the tyre seats. In other words, on the outer portions of the rim 12 shown in the drawing.

Optionally, this example may comprise a second thermal insulation element 20 provided on a surface of the rim 12 facing the cavity 18. In other words, on an inner surface of the cavity 18. As it is shown in the drawing, the second thermal insulation element 20 extends between the tyre seats of the rim 12, i.e., between both dotted perpendicular lines 3, 4.

The first thermal insulation element 16 blocks or at least reduces heat transfer from the tyre 14 to the rim 12 via the tyre seats. A loss of heat over the rim 12 to the ambient directly form the tyre 14 is thereby avoided or at least reduced. Thereby, heat in the tyre 14 is not further transferred to the rim 12. Instead, it is kept in the tyre 14, whereby the heated-up state of the tyre material due to the dynamical deformation of the tyre 14 is maintained longer leading to softer tyre characteristic and thereby to a reduction of the rolling resistance of the tyre 14. Additionally or alternatively to this effect, the tyre material acts as a heat storing element as the heat introduced into the tyre 14 is not transferred to the rim dure to the first thermal insulation element 16. Instead, the heat can be transferred to the cavity 18 and thereby increase the pressure of the gas therein, whereby the rolling resistance of the wheel 10 is reduced.

This effect is increased by the optional second thermal insulation element 20. The second thermal insulation element 20 is configured to block or at least reduce the heat transfer from the cavity 18 to the rim 12. In other words, the second thermal insulation element 20 is configured such that a higher amount of heat is transferred from the cavity 18 to the tyre 14 instead of to the rim 12 or that the heat is stored in the cavity 18 by the gas leading to an increased pressure in the cavity 18. Thereby the optional second thermal insulation element 20 helps to direct the heat flow to the tyre 14 or to store the heat in the cavity 18, wherein further heat flow from the tyre 14 via the tyre seat to the rim 12 is blocked or at least reduced by the first thermal insulation element 16.

In the shown example, the second thermal insulation element 20 is arranged between the tyre seats of the rim 12. In other words, the second thermal insulation element 20 extends between the two dotted lines 3, 4 along a rotational axis of the wheel 10 (not shown). At each dotted line 3,4 the second thermal insulation element 20 abuts to the respective first thermal insulation element 16, thereby forming a continuous insulation layer thermically insulating the tyre 14 and the cavity 18 against the rim 12. Leading to an increased thermal insulation characteristic as there are no gaps in the continuous layer comprising the first thermal insulation element 16 and the second thermal insulation element 20.

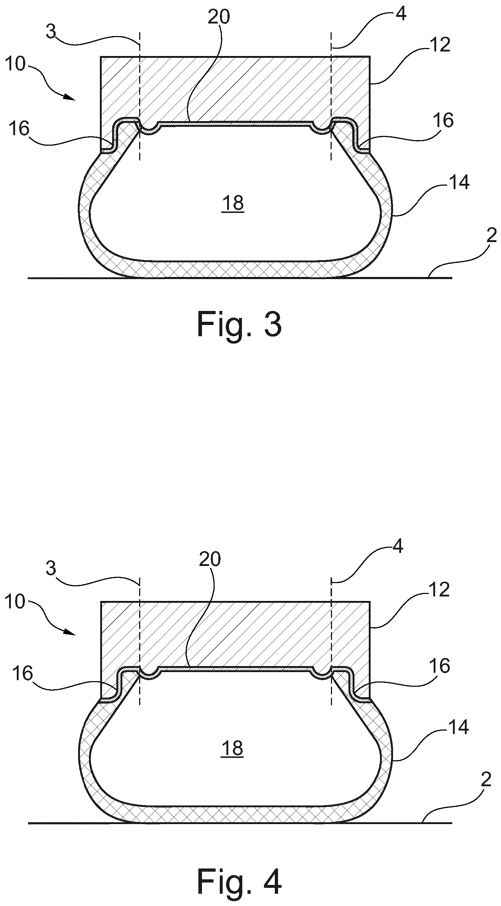

Figure 3 shows a second example of a wheel 10 of the vehicle 1. The configuration of this wheel 10 is similar to the configuration shown in Figure 2. Therefore, the differences with regard to Figure 2 are explained in the following. The same elements are labelled with the same reference sign.

Distinct to the example of Figure 2, the first thermal insulation element 16 is configured as a portion of the rim 12 instead as a portion of the tyre 14. As such, the first thermal insulation element 16 is configured as a tyre seat of the rim 12, extending in the drawing on the left side of the left perpendicular dotted line 3 and on the right side of the right perpendicular dotted line 4, respectively. As a part of the rim 12, the first thermal insulation element 16 may be configured as a coating on the rim 12 facing the tyre 14 and/or as an insulation material provided in the rim 12.

As the first thermal insulation element 16 is a portion of the rim 12, a commercially available tyre can be used as a tyre 14 to complete the wheel 10.

As the first thermal insulation element 16 is a portion of the rim 12, a continuous thermal insulation can be realized on the rim 12. The continuous thermal insulation comprising the first thermal insulation element 16 and the optional second thermal insulation element 20 and extends from the left end of the rim 12 to the right end of the rim 12. Thereby, the first thermal insulation elements 16 and the second thermal insulation element 20 form an insulation layer configured as one piece, whereby the tyre 14 and the cavity 18 are thermically insulated against the rim 12 without any gap in between, where heat may be transferred to the rim 12.

Figure 4 shows a third example of a wheel 10 of the vehicle 1. The configuration of this wheel 10 is similar to the configuration shown in Figure 2 or Figure 3. Therefore, the differences with regard to Figure 2 or Figure 3 are explained in the following. The same elements are labelled with the same reference sign.

According to this example, the first thermal insulation element 16 is configured as a separate element arranged between the rim 12 and the tyre 14. This allows providing the first thermal insulation element 16 between a commercially available rim 12 and a commercially available tyre 14 if the first the thermal insulation element 16 is configured accordingly. Thereby, a wheel 10 can be subsequently thermically insulated. Thereby, a customer can insulate a wheel 10 that is already in use by providing the first thermal insulation element 16 between the rim 12 and the tyre 14.

Further, a separate first thermal insulation element 16 can be exchanged separately without the need for exchanging a complete rim 12 or a complete tyre 14.

As it can be seen in the drawing, the first thermal insulation element 16 can be combined with a second thermal insulation element 20. Both thermal insulation elements 16, 20 can be configured as one piece covering the complete surface of the rim 12 facing the tyre 14 and the cavity 18. Thereby a complete insulation or exchange of the insulation can be realized only be one further part, namely the thermal insulation elements 16, 20 configured as one piece.

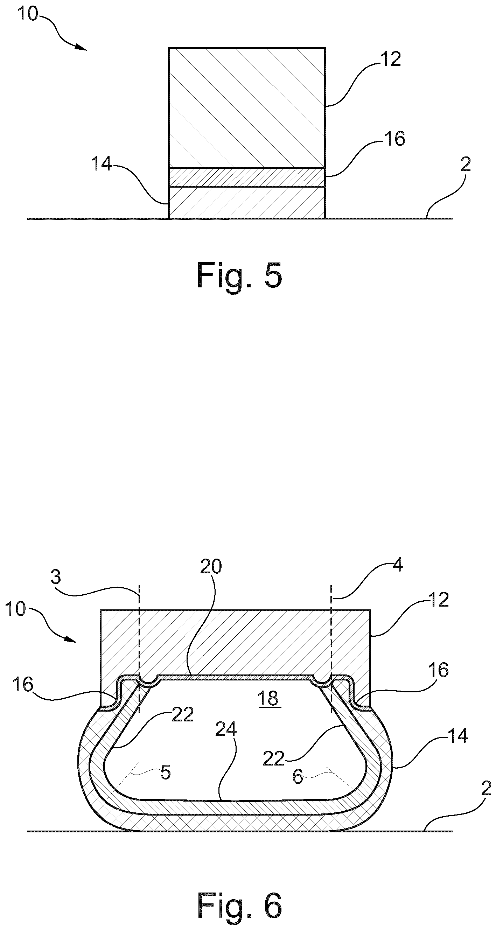

Figure 5 shows a third example of a wheel 10 of the vehicle 1. According to this example, the wheel 10 is configured as a gasless or airless wheel, comprising a gasless or airless tyre 14. In other words, the tyre 14 and the rim 12 do not form a cavity as shown in the previous Figures 2 to 4. However, a thermal insulation of the tyre 14 against the rim 12 is realized by providing a first thermal insulation element 16 between the rim 12 and the tyre 14. Thereby, the tyre 14 is thermically insulated against the rim 12 and therefore, a heat flow from the tyre 14 to the rim 12 is blocked by the first thermal insulation element 16 or at least reduced. The first thermal insulation element 16 may be configured as a portion of the rim 12 or as a portion of the tyre 14 reducing complexity of the wheel. Alternatively, the first thermal insulation element 16 may be configured as a separate element of the wheel 10. This allows a separate exchange of the first thermal insulation element 16 when it is damaged.

In the shown example, the rolling resistance is reduced by heating up the material of tyre 14, whereby it gets softer. By blocking or at least reducing the heat flow to the rim 12, the heating-up of the tyre 14 is increased and therefore the rolling resistance is reduced.

Figure 6 shows a further example of a wheel 10 of the vehicle 1. A wheel 10 according to Figure 4 is shown. However, the shown distinguishing features with regard to the example according to Figure 4 may also be applied to the examples shown in Figure 2 and Figure 3.

On the inner surface of the tyre 14 facing the cavity 18 a coating is provided. The coating is configured as a third thermal insulation element 22 insulating the cavity 18 against the tyre 14. In this example the interface the third thermal insulation element 22 is provided on extends over the side surfaces of the tyre 14 marked by the lines 5 and 6. Thereby, the third thermal insulation element 22 blocks or at least reduces heat transfer from the cavity 18 to the material of the tyre 14. This allows a better storage of the heat once introduced into the air or gas in the cavity 18 of the tyre 14 and avoids or reduces a loss of heat through the tyre 14. This leads to a higher air or gas pressure in the cavity 18 and thereby to a reduced rolling resistance.

Further, a separate heat storing element 24 is provided as a coating on the inner surface of the tyre 14 facing the cavity 18. The heat storing element 24 is arranged between the lines 5 and 6 and is configured to store heat. As it can be seen in the drawing, the heat storing element 24 is directly in contact with the tyre tread of the tyre 14. Thereby, a direct heat flow from the heat storing element 24 to the tyre 14 and vice versy can be generated. By the heat storing element 24 an increased amount of heat can be transferred and stored in the cavity 18 leading to an increased pressure in the cavity 18 and therefore to a reduced rolling resistance.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: vehicle
- 2: road
- 3: line
- 4: line
- 5: line
- 6: line
- 10: wheel
- 12: rim
- 14: tyre
- 16: first thermal insulation portion
- 18: cavity
- 20: second thermal insulation portion
- 22: third thermal insulation portion
- 24: heat storing element

## Claims

1. A wheel (10) for a vehicle (1), the wheel (10) comprising a rim (12) and a tyre (14), wherein the tyre (14) is mounted on the rim (12), wherein a first thermal insulation (16) element is provided between the rim (12) and the tyre (14).

2. The wheel (10) according to claim 1, wherein the first thermal insulation element (16) is a portion of the tyre (14) or wherein the first thermal insulation element (16) is a portion of the rim (12) or wherein the first thermal insulation element (16) is separate from the rim (12) and separate from the tyre (14).

3. The wheel (10) according to claim 1 or 2, wherein the tyre (14) is an airless or gasless tyre.

4. The wheel (10) according to claim 1 or 2, wherein a closed cavity (18) for a gas is at least limited by the rim (12) and the tyre (14).

5. The wheel (10) according to claim 4, further comprising a second thermal insulation element (20) provided at an interface between the rim (12) and the cavity (18).

6. The wheel (10) according to claim 5, wherein the first thermal insulation element (16) and the second thermal insulation element (20) are connected.

7. The wheel (10) according to claim 5 or 6, wherein the first thermal insulation element (16) and the second thermal insulation element (20) comprise the same thermal insulation material or consist of the same thermal insulation material, or wherein the first thermal insulation element (16) and the second thermal insulation element (20) comprise different thermal insulation materials or consist of different thermal insulation materials.

8. The wheel (10) according to any one of the claims 4 to 7, further comprising a third thermal insulation element (22) provided at an interface of an inner surface of the cavity (18).

9. The wheel (10) according to any one of the preceding claims, wherein the first thermal insulation element (16) and/or the second thermal insulation element (20) and/or the third thermal insulation element (22) is formed by a thermal insulation layer and/or a thermal insulation coating.

10. The wheel (10) according to any one of the preceding claims, wherein the first thermal insulation element (16) and/or the second thermal insulation element (20) and/or the third thermal insulation element (22) comprises a ceramic material, an elastomer material, a foam material, a porous material, a natural material, and/or a vacuumed cavity and/or a sandwich element.

11. The wheel (10) according to any one of the preceding claims, further comprising a heat storing element (24).

12. A rim (12) for a wheel (10) according to any one of claims 1 to 11, wherein the first thermal insulation element (16) is a portion of the rim (12) or wherein the rim (12) is configured to receive or contact the first thermal insulation element (16).

13. A tyre (14) for a wheel (10) according to any one of claims 1 to 11, wherein the first thermal insulation element (16) is a portion of the tyre (14) or wherein the tyre (14) is configured to receive or contact the first thermal insulation element (16).

14. A thermal insulation element arrangeable between a tyre (14) for a wheel (10) according to any one of claims 1 to 11 and a rim (12) for a wheel (10) according to any one of claims 1 to 11.

15. A vehicle (1) comprising at least one wheel (10) according to one of the claims 1 to 11.

16. A method for assembling or thermically insulating a wheel (10) according to one of the claims 1 to 11 comprising at least the step of providing a first insulation element (16) between the rim (12) and the tyre (14).
